# EUROPEAN PATENT APPLICATION

(11) **EP 4 793 230 A1**
(43) Date of publication of application: **19.08.2026**
(21) Application number: 24891716.3
(22) Date of filing: 08.11.2024
(51) Int. Cl.: C01B 3/38, C01B 3/48, C01B 3/50, C10L 3/08, C10L 3/10

(54) **METHOD AND SYSTEM FOR PRODUCING HYDROGEN**

(30) Priority: 16.11.2023 KR 20230158964
(71) Applicant: SK Innovation Co., Ltd., Seoul 03188 (KR)
(72) Inventor: JEON, Heejung, Daejeon 34124 (KR); KIM, Okyoun, Daejeon 34124 (KR); SON, Sungreal, Daejeon 34124 (KR); PARK, Junhyung, Daejeon 34124 (KR); YU, Seunghan, Daejeon 34124 (KR); YUN, Seokwon, Daejeon 34124 (KR); JEONG, Yongseong, Daejeon 34124 (KR)
(74) Representative: Lorenz Seidler Gossel Part. mbB
(86) International application number: PCT/KR2024/017584
(87) International publication number: WO 2025/105770

(57) **Abstract**

The present disclosure relates to a method and a system for producing hydrogen, the method comprising the steps of: (S1) purifying landfill gas, thereby generating a first mixed gas; (S2) performing steam reforming on the first mixed gas in a first reactor, thereby generating a second mixed gas; (S3) separating the second mixed gas into a first stream comprising carbon dioxide and a second stream comprising hydrogen and carbon monoxide; (S4) introducing the first stream, separated out in step (S3), into a second reactor and converting same into carbon monoxide through reverse Boudouard reaction; (S5) mixing the second stream and the carbon monoxide converted in step (S4), thereby preparing a third mixed gas; (S6) generating syngas from the third mixed gas through water-gas shift reaction; and (S7) separating carbon dioxide from the syngas, thereby obtaining hydrogen.

## Description

### [Technical Field]

The present disclosure relates to a method and system for producing hydrogen.

### [Background Art]

Landfill gas (LFG) refers to a gas generated as organic materials in waste buried in a landfill are decomposed through an anaerobic decomposition process, and mainly contains methane and carbon dioxide. Recently, methods and technologies for recycling such landfill gas have been developed. Representative examples include gasification process technologies in which landfill gas is used to produce syngas and the syngas is converted into high-value-added products for energy recovery.

A gasification process generally refers to a series of processes in which carbonaceous feedstocks such as coal, organic waste, and biomass are reacted under a supply of steam, oxygen, carbon dioxide, or a mixture thereof and converted into syngas.

Gasification process technology has been extended to technologies for producing feedstocks and fuels for various compounds. For example, hydrogen in syngas may be used in applications such as hydrogen power generation, ammonia production, and refinery processes. However, when hydrogen is obtained from syngas produced from landfill gas, the hydrogen yield is very low, making it difficult to effectively obtain hydrogen from landfill gas.

In recent years, a gasification process using a catalyst has been employed as a process for producing syngas; however, coke formation in the gasification process deactivates the catalyst, thereby causing process issues during continuous operation due to the deactivated catalyst. In addition, in order to ensure cost-effectiveness, a relatively expensive catalyst needs to be recovered; however, to recover the catalyst discharged in an agglomerated state with coke and the like, a number of subsequent processes (such as air burning) should be performed, resulting in a significant decrease in process efficiency.

In addition, in conventional gasification processes for landfill gas, the production yield of syngas that may be converted into high-value-added products is significantly low, at 30% or less, resulting in low productivity and limiting the utilization or commercialization of the syngas. Further, although it is desirable to suppress carbon dioxide emissions from the viewpoint of environmental protection, the products of the gasification reaction of landfill gas contain carbon dioxide in addition to hydrogen and carbon monoxide, resulting in a large amount of carbon dioxide emissions and thereby posing a serious problem of further aggravating environmental pollution.

Accordingly, there is a need for a hydrogen production method and production system that may efficiently obtain hydrogen by improving the yields of syngas, which may be converted into high-value-added products in a gasification process of landfill gas, and of hydrogen obtained therefrom, while minimizing the generation of carbon dioxide.

### [Disclosure]

### [Technical Problem]

According to an aspect of the present disclosure, the production yield of hydrogen from landfill gas may be significantly improved.

According to another aspect of the present disclosure, a method and system for producing hydrogen with significantly improved process efficiency may be provided.

According to still another aspect of the present disclosure, a method and system for producing hydrogen capable of minimizing the generation of carbon dioxide may be provided.

According to an aspect of the present disclosure, no residual gas may be generated during hydrogen production.

According to another aspect of the present disclosure, a catalyst may be regenerated to perform a continuous dual circulating fluidized bed reaction.

### [Technical Solution]

In one general aspect, a method for producing hydrogen includes: (S1) purifying landfill gas to generate a first mixed gas; (S2) generating a second mixed gas by steam reforming the first mixed gas in a first reactor; (S3) separating the second mixed gas into a first stream containing carbon dioxide and a second stream containing hydrogen and carbon monoxide; (S4) introducing the first stream separated in step (S3) into a second reactor and converting the first stream into carbon monoxide through a reverse Boudouard reaction; (S5) producing a third mixed gas by mixing the second stream with the carbon monoxide converted in step (S4); (S6) generating syngas from the third mixed gas through a water-gas shift reaction; and (S7) separating carbon dioxide from the syngas to obtain hydrogen.

In an embodiment according to the present disclosure, step (S1) may include removing at least one selected from the group consisting of sulfur, chlorine, carbonyl sulfide, tar, nitrogen, benzene, toluene, ethylbenzene, xylene, CHCl₃, CC1₄, CH₃CCl₃, C₂H₂Cl₂, H₂S, and NH₃ from the landfill gas.

In an embodiment according to the present disclosure, a carbon source may be supplied to the second reactor from outside.

In an embodiment according to the present disclosure, the first stream may contain 50 vol% or more of carbon dioxide.

In an embodiment according to the present disclosure, the first mixed gas may have a C/O elemental ratio of 0.15 to 15.

In an embodiment according to the present disclosure, step (S2) may be performed in the presence of a composite catalyst in which an active metal is supported on a support.

In an embodiment according to the present disclosure, the active metal may include one or more selected from the group consisting of nickel, vanadium, iron, platinum, palladium, and ruthenium.

In an embodiment according to the present disclosure, the support may include one or more selected from the group consisting of silica, alumina, silica-alumina, carbon, zirconia, titania, zeolite, SAPO, and ALPO.

In an embodiment according to the present disclosure, step (S2) may be performed at a temperature of 700 to 1,000°C.

In an embodiment according to the present disclosure, step (S4) may be performed at a temperature of 600 to 1,000°C and a pressure of 50 to 300 kPa.

In another general aspect, a system for producing hydrogen includes: a purification unit configured to purify landfill gas to generate a first mixed gas; a first reactor configured to generate a second mixed gas by subjecting the first mixed gas to a steam reforming reaction in the presence of a catalyst; a carbon dioxide separation unit configured to separate the second mixed gas into a first stream containing carbon dioxide and a second stream containing hydrogen and carbon monoxide; a second reactor configured to convert the first stream into carbon monoxide through a reverse Boudouard reaction; a gas mixing unit configured to produce a third mixed gas by mixing the second stream with the carbon monoxide converted in the second reactor; and a syngas generation unit configured to convert the third mixed gas into syngas through a water-gas shift reaction, wherein carbon dioxide is separated from the syngas in the carbon dioxide separation unit to obtain hydrogen.

In an embodiment according to the present disclosure, the first reactor may be a first fluidized bed reactor, and the second reactor may be a second fluidized bed reactor.

In an embodiment according to the present disclosure, the system for producing hydrogen may further include: a cyclone connected between the first fluidized bed reactor and the carbon dioxide separation unit; a catalyst supply line connecting the cyclone and the second fluidized bed reactor; and a catalyst recirculation line connecting the second fluidized bed reactor and the first fluidized bed reactor, wherein the cyclone may be configured to separate the second mixed gas and the catalyst discharged from the first fluidized bed reactor, supply the second mixed gas to the carbon dioxide separation unit, and supply the catalyst to the second fluidized bed reactor.

In an embodiment according to the present disclosure, the purification unit may include at least one selected from the group consisting of a scrubber, an adsorption column, and pressure swing adsorption (PSA).

### [Advantageous Effects]

The method and system for producing hydrogen according to an embodiment of the present disclosure may significantly improve the production yield of hydrogen from landfill gas.

The method and system for producing hydrogen according to another embodiment of the present disclosure may significantly improve process efficiency.

The method and system for producing hydrogen according to still another embodiment of the present disclosure may minimize the generation of carbon dioxide.

The method and system for producing hydrogen according to an embodiment of the present disclosure may allow hydrogen to be produced without generating residual gas.

The method and system for producing hydrogen according to another embodiment of the present disclosure may regenerate a catalyst to perform a continuous dual circulating fluidized bed reaction.

The method and system for producing hydrogen according to still another embodiment of the present disclosure may produce hydrogen from landfill gas in an eco-friendly manner.

### [Description of Drawings]

FIG. 1 is a schematic diagram showing a system for producing hydrogen according to an embodiment of the present disclosure.
FIG. 2 is a schematic diagram showing a system for producing hydrogen including a catalyst circulation process according to an embodiment of the present disclosure.

### [Best Mode]

The advantages and features of the present disclosure, and methods for achieving them, will become apparent with reference to the embodiments described below in detail. However, the present disclosure is not limited to the embodiments disclosed below and may be implemented in various different forms. These embodiments are provided only so that the disclosure of the present disclosure is complete and the scope of the invention is fully conveyed to those skilled in the art to which the present disclosure pertains, and the present disclosure is defined only by the scope of the claims.

Unless otherwise defined, all terms (including technical and scientific terms) used in the present specification may be used with meanings commonly understood by those skilled in the art to which the present disclosure pertains.

Unless otherwise specifically indicated, singular forms used in the present specification may be construed to include plural forms.

A numerical range used in the present specification includes upper and lower limits and all values within these limits, increments logically derived from the form and span of a defined range, all doubly limited values, and all possible combinations of the upper and lower limits in the numerical range defined in different forms. Unless otherwise specifically defined in the present specification of the present disclosure, values out of the numerical range that may occur due to experimental errors or rounding of values also fall within the defined numerical range.

The term "comprise(s)" described in the present specification is an open-ended description having a meaning equivalent to terms such as "include(s)", "contain(s)", "have(has)", and "is/are characterized by", and does not exclude elements, materials, or processes which are not further listed.

Unless otherwise defined, the unit of % used in the present specification without special mention refers to wt%.

In the present specification, unless otherwise specifically defined, "A to B" means "A or more and B or less".

In the present specification, "syngas" refers to a mixed gas containing hydrogen and carbon dioxide, and may additionally contain carbon monoxide.

Hereinafter, the method and system for producing hydrogen of the present disclosure will be described in detail. However, the description is merely exemplary and the present disclosure is not limited to specific embodiments described by way of example.

Conventionally, a gasification process using a catalyst has been employed as a process for producing syngas; however, coke formation in the gasification process deactivates the catalyst, thereby causing process issues during continuous operation due to the deactivated catalyst. Further, although it is necessary to recover relatively expensive catalysts in order to ensure economic feasibility, recovering catalysts discharged in a state in which coke and the like are agglomerated requires performing a number of subsequent processes (such as air burning), resulting in a significant decrease in process efficiency. In addition, a large amount of carbon dioxide is emitted during the process, thereby causing environmental pollution. In addition, conventional gasification processes for landfill gas have been problematic in that the production yield of syngas is significantly low, at 30% or less, and the hydrogen production yield is low, resulting in low productivity. Accordingly, the inventors of the present disclosure have devised a production method and system capable of achieving a significantly high hydrogen yield from landfill gas while minimizing the amount of carbon dioxide generated.

The present disclosure provides a method for producing hydrogen, the method including: (S1) purifying landfill gas to generate a first mixed gas; (S2) generating a second mixed gas by steam reforming the first mixed gas in a first reactor; (S3) separating the second mixed gas into a first stream containing carbon dioxide and a second stream containing hydrogen and carbon monoxide; (S4) introducing the first stream separated in step (S3) into a second reactor and converting the first stream into carbon monoxide through a reverse Boudouard reaction; (S5) producing a third mixed gas by mixing the second stream with the carbon monoxide converted in step (S4); (S6) generating syngas from the third mixed gas through a water-gas shift reaction; and (S7) separating carbon dioxide from the syngas to obtain hydrogen.

In the method for producing hydrogen according to the present disclosure, landfill gas may be converted into syngas with high efficiency as compared with conventional gasification processes, thereby maximizing the yield of high-value-added hydrogen converted from the syngas. In addition, carbon dioxide generated in the process of producing syngas may be converted into a feedstock for syngas, thereby minimizing the generation of carbon dioxide in the hydrogen production process and preventing environmental pollution.

In an embodiment according to the present disclosure, the first mixed gas may include methane, hydrogen, carbon monoxide, and carbon dioxide.

As an example for increasing a content of methane in the first mixed gas, the first mixed gas may further include one or more selected from the group consisting of landfill gas, shale gas, refinery off-gas, and biogas. The landfill gas, shale gas, refinery off-gas, and biogas described above contain methane and carbon dioxide in an amount of 40 vol% or more, specifically 50 vol% or more. Accordingly, when the first mixed gas further includes the above-described gas, the production yield of syngas may be further improved through subsequent processes such as a steam reforming reaction and a reverse Boudouard reaction.

In an embodiment according to the present disclosure, an upper limit of the C/O elemental ratio of the first mixed gas may be 15 or less or 4 or less, and a lower limit thereof may be 0.15 or more or 0.3 or more. Specifically, the C/O elemental ratio may be 0.15 to 15, and more specifically 0.3 to 4.

In the method for producing hydrogen according to the present disclosure, a steam reforming reaction may be smoothly performed even when the first mixed gas has a relatively high C/O elemental ratio within the above-described range. Specifically, because the catalyst used in the steam reforming reaction is circulated through a circulation process described below, the reaction may be continuously performed regardless of deactivation of the catalyst due to coke that may be formed by the steam reforming reaction.

The landfill gas may include at least one impurity selected from the group consisting of sulfur, chlorine, carbonyl sulfide, tar, and nitrogen. Specifically, the landfill gas may include impurities such as benzene, toluene, ethylbenzene, xylene, CHCl₃, CC1₄, CH₃CCl₃, C₂H₂Cl₂, H₂S, and tar. These impurities contained in the landfill gas may induce deactivation of the catalyst and reduce efficiency of a subsequent process. Accordingly, overall process efficiency may be improved by removing impurities from the landfill gas and purifying the landfill gas.

In an embodiment according to the present disclosure, step (S1) may include removing at least one selected from the group consisting of sulfur, chlorine, carbonyl sulfide, tar, nitrogen, benzene, toluene, ethylbenzene, xylene, CHCl₃, CC1₄, CH₃CCl₃, C₂H₂Cl₂, H₂S, and NH₃ from the landfill gas.

Step (S1) may be performed using at least one selected from the group consisting of a scrubber, an adsorption column, and pressure swing adsorption (PSA).

In addition, the purification may be performed using at least one selected from the group consisting of a high-pressure dust-collecting filter, water washing, alkaline solution washing, and passing through a ceramic filter, or a combination of two or more thereof, but is not limited thereto. When water washing or alkaline solution washing is used, impurities such as H₂S and NH₃ contained in the landfill gas may be removed, and when the landfill gas is passed through a ceramic filter, a dust-collecting filter, or the like, impurities such as tar and dust may also be removed.

In an embodiment according to the present disclosure, step (S2) is a step of producing a second mixed gas by steam reforming methane contained in the first mixed gas in a first reactor. In step (S2), a reforming reaction according to the following Reaction Scheme 1 may be involved.

[Reaction Scheme 1] CH₄ + H₂O → CO + 3H₂ (steam reforming reaction)

The reforming reaction in step (S2) may be performed at a temperature of 600 to 1,400°C and a pressure of 30 to 2,000 kPa.

Step (S2) may be performed without a catalyst, but may also be performed using a catalyst in order to increase the reaction conversion at a low temperature of 600 to 700°C. As the catalyst in step (S2), a composite catalyst in which an active metal is supported on a support may be used. The active metal may include one or more selected from the group consisting of nickel, vanadium, iron, platinum, palladium, and ruthenium. Generally, nickel, vanadium, or iron may be used as the active metal, and when the feedstock, such as organic waste, has a low impurity content in the heat treatment process, a noble metal such as platinum, palladium, or ruthenium may be used.

In an embodiment according to the present disclosure, the support may be a solid acid material such as an oxide or a zeolite, and specifically may be one or more selected from the group consisting of ZSM-5, ZSM-11, USY zeolite, ferrierite, mordenite, MCM-22, SUZ-4, L-type zeolite, silica, alumina, silica-alumina, carbon, zirconia, and titania.

The steam reforming reaction may be performed in a first fixed bed reactor or a first fluidized bed reactor.

By performing the steam reforming reaction of step (S2) in the first fixed bed reactor, reforming reactivity of methane and process stability may be improved so that syngas may be produced at a high yield, thereby improving the yield of hydrogen. Specifically, when methane is reformed using the steam reforming reaction, reforming reactivity may be improved compared with dry reforming, impurities such as chlorine may also be removed, and little carbon accumulates on the reforming catalyst, such that a continuous process may be performed.

In addition, when step (S2) is performed in the first fluidized bed reactor, the catalyst may be circulated through a circulation process in which the catalyst is introduced into a subsequent reverse Boudouard reaction process, regenerated, and then resupplied. As the steam reforming reaction is performed in step (S2), coke may accumulate on the catalyst and deactivate the catalytic reaction. However, because step (S2) is performed in the first fluidized bed reactor, a circulation process for regenerating and resupplying the catalyst may be performed, such that a continuous reforming reaction is possible even when steam reforming is performed.

Step (S3) is a step of separating the second mixed gas into a first stream containing carbon dioxide and a second stream containing hydrogen and carbon monoxide.

In an embodiment according to the present disclosure, the method of separating the second mixed gas into the first stream and the second stream is not particularly limited as long as it is a known method. In the present disclosure, the separation may be performed using a carbon dioxide separation unit, and the carbon dioxide separation unit may be an amine scrubber. In general, an amine scrubber, which binds and removes carbon dioxide using an amine-based material, may separate components such as carbon dioxide and hydrogen sulfide from gas and recover a gas stream containing hydrogen, carbon monoxide, or an inert gas. Accordingly, when an amine scrubber is used, the second mixed gas may be separated into the first stream and the second stream.

In another embodiment according to the present disclosure, the carbon dioxide separation unit may be a carbon capture and storage unit (CCS unit). When a CCS unit is used for separation of carbon dioxide, the CCS unit may adsorb and separate carbon dioxide using an adsorbent including one or two or more selected from calcium oxide, calcium hydroxide, dolomite, limestone, and trona. The second mixed gas may be separated into the first stream and the second stream using the carbon capture and storage unit (CCS unit).

The first stream may contain carbon dioxide in an amount having a lower limit of 40 vol% or more, 50 vol% or more, or 60 vol% or more, and an upper limit of 99 vol% or less, 90 vol% or less, 80 vol% or less, or 70 vol% or less. Specifically, the first stream may contain 40 to 99 vol% of carbon dioxide, and more specifically 50 to 80 vol% of carbon dioxide. In the carbon dioxide separation unit, when carbon dioxide is captured and then separated, a regeneration column in which carbon dioxide is separated from the adsorbent needs to be designed to have a high number of stages in order to separate carbon dioxide at high purity, and thus more energy may be consumed. Accordingly, as the first stream contains carbon dioxide within the above-described range, the carbon dioxide separation process may be performed under milder conditions.

In an embodiment according to the present disclosure, step (S4) is a step of introducing the first stream separated in step (S3) into a second reactor and converting the first stream into carbon monoxide through a reverse Boudouard reaction. By additionally converting carbon dioxide contained in the first stream into carbon monoxide through the reverse Boudouard reaction, carbon dioxide emissions may be reduced, thereby preventing environmental pollution, and the yield of syngas may be maximized, thereby also maximizing the yield of hydrogen. The reverse Boudouard reaction may involve the following Reaction Scheme 2.

[Reaction Scheme 2] C + CO₂ → 2CO

Step (S4) may be performed at a temperature of 600 to 1,000°C and a pressure of 50 to 300 kPa.

In an embodiment according to the present disclosure, in step (S4), the carbon source for the reverse Boudouard reaction may be a catalyst on which coke supplied in step (S2) is deposited. In addition, if necessary, the reaction may be performed by additionally supplying activated carbon, graphite, or the like from outside. The graphite may be high-purity graphite.

The reverse Boudouard reaction may be performed in a second fixed bed reactor or a second fluidized bed reactor.

By performing the reverse Boudouard reaction of step (S4) in the second fixed bed reactor, carbon dioxide may be converted into carbon monoxide with high efficiency even when the first stream contains carbon dioxide within the above-described range. In addition, in the present disclosure, when a first fixed bed reforming reactor is used in step (S2), it may be advantageous, in terms of increasing the amount of syngas produced, to improve the reactivity of the reverse Boudouard reaction by using a second fixed bed reactor for the reverse Boudouard reaction having excellent reaction efficiency in step (S4).

When the steam reforming reaction of step (S2) is performed in the first fluidized bed reactor, the catalyst may be separated from the second mixed gas discharged from the first fluidized bed reactor by a cyclone, and the separated catalyst may be supplied, through a catalyst supply line, to the second fluidized bed reactor in which the reverse Boudouard reaction is performed. In a second fluidized bed reactor 40, the catalyst may serve as a carbon source for the reverse Boudouard reaction and be regenerated, and the regenerated catalyst may be supplied again to a first fluidized bed reactor 20 through a recirculation line. When such a catalyst circulation process is used, the reforming reaction may be continuously performed, and an economical process may also be performed because there is no need to supply a carbon source required for the reverse Boudouard reaction from outside.

That is, according to an embodiment of the present disclosure, the yield of syngas may be maximized through the steam reforming reaction and the reverse Boudouard reaction, and because the first fluidized bed reactor and the second fluidized bed reactor, in which the steam reforming reaction and the reverse Boudouard reaction are performed, are connected through a circulation process, continuous and economical process operation through catalyst regeneration may also be achieved.

In an embodiment according to the present disclosure, step (S5) may be a step of generating a third mixed gas by mixing the second stream separated in the carbon dioxide separation unit with the carbon monoxide converted by the reverse Boudouard reaction in step (S4).

The third mixed gas may contain hydrogen and carbon monoxide.

In an embodiment according to the present disclosure, step (S6) is a step of generating syngas through a water-gas shift reaction. The third mixed gas may be converted into syngas through the water-gas shift reaction. The water-gas shift reaction may involve the following Chemical Formula 3.

[Reaction Scheme 3] CO + H₂O → H₂ + CO₂

The syngas refers to a mixed gas containing hydrogen and carbon dioxide, and may additionally contain carbon monoxide.

The water-gas shift reaction may be performed in the presence of a catalyst containing Fe and Cr.

The water-gas shift reaction may be performed at a temperature of 100 to 400°C, specifically 100 to 300°C, and a pressure of 20 to 80 bar, specifically 25 to 70 bar.

The water-gas shift reaction may be repeatedly performed so that a conversion of carbon dioxide is 95% or more, 96% or more, 97% or more, 98% or more, or 99% or more.

In an embodiment according to the present disclosure, step (S7) is a step of separating carbon dioxide from the syngas to obtain hydrogen.

In step (S7), the carbon dioxide separation unit of step (S3) may be used. That is, in step (S7), the syngas may be reintroduced into the carbon dioxide separation unit of step (S3), such that carbon dioxide may be separated therefrom.

In addition, the present disclosure provides a system for producing hydrogen. The content described with respect to the method for producing hydrogen may be equally applied to the system for producing hydrogen within the overlapping scope.

The present disclosure provides a system for producing hydrogen, the system including: a purification unit configured to purify landfill gas to generate a first mixed gas; a first reactor configured to generate a second mixed gas by subjecting the first mixed gas to a steam reforming reaction in the presence of a catalyst; a carbon dioxide separation unit configured to separate the second mixed gas into a first stream containing carbon dioxide and a second stream containing hydrogen and carbon monoxide; a second reactor configured to convert the first stream into carbon monoxide through a reverse Boudouard reaction; a gas mixing unit configured to produce a third mixed gas by mixing the second stream with the carbon monoxide converted in the second reactor; and a syngas generation unit configured to convert the third mixed gas into syngas through a water-gas shift reaction, wherein carbon dioxide is separated from the syngas in the carbon dioxide separation unit to obtain hydrogen.

A system for producing hydrogen 1 according to the present disclosure may produce syngas 230 and hydrogen efficiently and economically by performing a steam reforming reaction and a reverse Boudouard reaction, and may significantly reduce carbon dioxide emissions.

In an embodiment according to the present disclosure, a purification unit 10 may remove at least one selected from the group consisting of sulfur, chlorine, carbonyl sulfide, tar, nitrogen, benzene, toluene, ethylbenzene, xylene, CHCl₃, CCl₄, CH₃CCl₃, C₂H₂Cl₂, H₂S, and NH₃ from the landfill gas.

In addition, the purification unit 10 may include at least one selected from the group consisting of a scrubber, an adsorption column, and pressure swing adsorption (PSA).

The purification unit 10 may include a sprayer for spraying a liquid to bring landfill gas 100 into contact with water or a weakly basic solution containing sodium carbonate to remove impurities such as H₂S, HCl, HOCl, and NH₃, may remove dust using a high-pressure dust collection filter, and may remove impurities such as tar by including a ceramic filter.

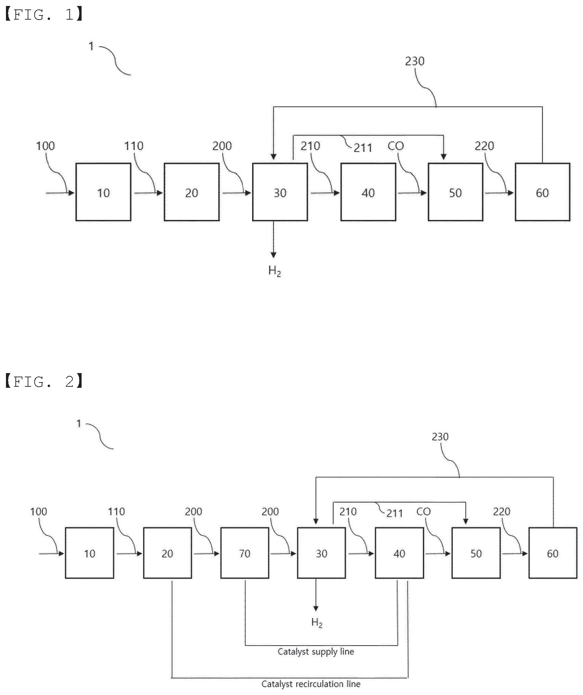

Referring to FIG. 1, the landfill gas 100 is introduced into the purification unit 10 to generate a first mixed gas 110. The first mixed gas 110 is introduced into a first reactor 20 and converted into a second mixed gas 200 by a steam reforming reaction.

The second mixed gas is introduced into a carbon dioxide separation unit 30 and separated into a first stream 210 containing carbon dioxide and a second stream 211 containing hydrogen and carbon monoxide. The second stream is directly supplied to a gas mixing unit 50, and the first stream is supplied to a second reactor 40 and converted into carbon monoxide through a reverse Boudouard reaction.

In an embodiment according to the present disclosure, the first reactor may be a first fluidized bed reactor, and the second reactor may be a second fluidized bed reactor.

In addition, referring to FIG. 2, in an embodiment according to the present disclosure, the system for producing hydrogen 1 may further include: a cyclone 70 connected between the first fluidized bed reactor and the carbon dioxide separation unit; a catalyst supply line connecting the cyclone and the second fluidized bed reactor; and a catalyst recirculation line connecting the second fluidized bed reactor and the first fluidized bed reactor, and the cyclone 70 may be configured to separate the second mixed gas and the catalyst discharged from the first fluidized bed reactor, supply the second mixed gas to the carbon dioxide separation unit 30, and supply the catalyst to the second fluidized bed reactor.

Because, in the system for producing hydrogen according to the present disclosure, the above-described first fluidized bed reactor and second fluidized bed reactor are connected through a circulation process, continuous process operation through catalyst regeneration is possible. In addition, more economical process operation is possible because, without the need to separately supply a carbon source for performing the reverse Boudouard reaction to the second fluidized bed reactor, a catalyst on which coke supplied from the first fluidized bed reactor is deposited may be used.

The gas mixing unit 50 is configured to produce a third mixed gas 220 by mixing the second stream 211 with carbon monoxide converted in the second fluidized bed reactor 40. The third mixed gas 220 is supplied to a Syngas generation unit 60 and converted into the syngas 230 through a water-gas shift reaction.

The syngas may be reintroduced into the carbon dioxide separation unit 30, and carbon dioxide may be separated therefrom. Hydrogen may thus be obtained.

Hereinafter, examples of the present disclosure will be further described with reference to specific experimental examples. The examples and comparative examples included in the experimental examples are merely illustrative of the present disclosure and do not limit the scope of the accompanying claims. It is obvious to those skilled in the art that various modifications and alterations may be made without departing from the spirit and scope of the present disclosure, and it is obvious that these modifications and alterations are within the accompanying claims.

### [Example 1]

Landfill gas having the composition shown in Table 1 was fed at 2.0 L/g_{cat}·h into a scrubber to remove sulfur and chlorine, introduced into an adsorption column to remove carbonyl sulfide and tar, and then introduced into pressure swing adsorption (PSA) to remove nitrogen, thereby recovering a first mixed gas.

**[Table 1]**

| | Substance | Composition |
|---|---|---|
| Main components (vol%) | CH₄ | 60.7 |
| | CO₂ | 25.3 |
| | N₂ | 8.7 |
| | O₂ | 3.1 |
| Impurities (ppm) | Benzene | 5.3 |
| | Toluene | 35.1 |
| | Ethylbenzene | 15.3 |
| | Xylene | 15.4 |
| | CHCl₃ | 199.3 |
| | CCl₄ | 84.3 |
| | CH₃CCl₃ | 2.3 |
| | C₂H₂Cl₂ | 2.2 |
| | H₂S | 221.3 |
| Others (wt %) | Moisture | 0.13 |

The first mixed gas was supplied to a first fluidized bed reactor, and steam was simultaneously supplied thereto, thereby producing a second mixed gas through steam reforming under operating conditions of 900°C, 2.0 L/g_{cat}·h, and CH₄/H₂O = 3 in the presence of an Ni/Al₂O₃ catalyst.

The second mixed gas was introduced into an amine scrubber, and carbon dioxide in the second mixed gas was captured in the amine scrubber, thereby separating a second stream from which carbon dioxide was separated. Specifically, the second mixed gas was introduced into a first amine scrubber, and carbon dioxide was captured in a 12 wt% aqueous amine solution in which monoethanolamine (MEA) was dissolved at 50°C, and uncaptured gas was recovered as the second stream. The aqueous amine solution in the first amine scrubber was introduced into a second amine scrubber and separated into an amine aqueous solution and carbon dioxide at 100°C, and the carbon dioxide was recovered as the first stream.

The recovered first stream was introduced into a second fluidized bed reactor and converted into carbon monoxide through a reverse Boudouard reaction. The reverse Boudouard reaction was performed by supplying the first stream to the second fluidized bed reactor and simultaneously continuously supplying high-purity graphite under operating conditions of 750°C and a throughput of 2.0 L/g_{cat}·h in the presence of a spent Ni/Al₂O₃ catalyst used in the first fluidized bed reactor. Through the reverse Boudouard reaction, 71% of the carbon dioxide was converted into carbon monoxide. The spent Ni/Al₂O₃ catalyst was regenerated and supplied to the first fluidized bed reactor.

The carbon monoxide converted from the first stream and the second stream were introduced into a gas mixing unit and mixed at 200°C to produce a third mixed gas.

The third mixed gas was introduced into a syngas generation unit, and syngas having an H₂:CO₂ molar ratio of 1.6:1 was produced through a water-gas shift reaction performed under operating conditions of 165°C, 35 bar, and a throughput of 1.4 L/g_{cat}·h in the presence of a Cu/Zn/Al₂O₃ catalyst.

The syngas was reintroduced into the amine scrubber. Carbon dioxide in the syngas was captured in the amine scrubber, and hydrogen was obtained. Table 2 shows the amount of hydrogen obtained based on the landfill gas introduced as the feed.

### [Comparative Example 1]

Comparative Example 1 was performed in the same manner as in Example 1, except that, after obtaining the second stream, no subsequent process was performed. Table 2 shows the hydrogen in the second stream obtained from the landfill gas introduced as the feed.

### [Comparative Example 2]

Comparative Example 2 was performed in the same manner as in Example 1, except that the reverse Boudouard reaction was not performed. Table 2 shows the amount of hydrogen obtained based on the landfill gas introduced as the feed.

**[Table 2]**

| | Amount of hydrogen obtained based on landfill gas introduced as feed (vol%) |
|---|---|
| Example 1 | 372.5 |
| Comparative Example 1 | 190.2 |
| Comparative Example 2 | 267.9 |

When no subsequent process was performed after obtaining the second stream, as in Comparative Example 1, it was found that the amount of hydrogen obtained based on the landfill gas introduced as the feed was 190.2 vol%.

When the reverse Boudouard reaction was not performed, as in Comparative Example 2, it was found that the amount of hydrogen obtained based on the landfill gas introduced as the feed was 267.9 vol%.

However, when the water-gas shift reaction was performed after the reverse Boudouard reaction, as in Example 1, it was found that the amount of hydrogen obtained based on the landfill gas introduced as the feed was 372.5 vol%. That is, it was confirmed that, when the water-gas shift reaction was performed after the reverse Boudouard reaction as in Example 1, a significantly larger amount of hydrogen could be obtained than in Comparative Examples 1 and 2.

- 1: System for producing hydrogen
- 10: Purification unit
- 20: First reactor
- 30: Carbon dioxide separation unit
- 40: Second reactor
- 50: Gas mixing unit
- 60: Syngas generation unit
- 70: Cyclone
- 100: Landfill gas
- 110: First mixed gas
- 200: Second mixed gas
- 210: First stream
- 211: Second stream
- 220: Third mixed gas
- 230: Syngas

## Claims

1. A method for producing hydrogen, the method comprising:
(S1) purifying landfill gas to generate a first mixed gas;
(S2) generating a second mixed gas by steam reforming the first mixed gas in a first reactor;
(S3) separating the second mixed gas into a first stream containing carbon dioxide and a second stream containing hydrogen and carbon monoxide;
(S4) introducing the first stream separated in step (S3) into a second reactor and converting the first stream into carbon monoxide through a reverse Boudouard reaction;
(S5) producing a third mixed gas by mixing the second stream with the carbon monoxide converted in step (S4);
(S6) generating syngas from the third mixed gas through a water-gas shift reaction; and
(S7) separating carbon dioxide from the syngas to obtain hydrogen.

2. The method of claim 1, wherein step (S1) includes removing at least one selected from the group consisting of sulfur, chlorine, carbonyl sulfide, tar, nitrogen, benzene, toluene, ethylbenzene, xylene, CHCl₃, CCl₄, CH₃CCl₃, C₂H₂Cl₂, H₂S, and NH₃ from the landfill gas.

3. The method of claim 1, wherein a carbon source is supplied to the second reactor from outside.

4. The method of claim 1, wherein the first stream contains 50 vol% or more of carbon dioxide.

5. The method of claim 1, wherein the first mixed gas has a C/O elemental ratio of 0.15 to 15.

6. The method of claim 1, wherein step (S2) is performed in the presence of a composite catalyst in which an active metal is supported on a support.

7. The method of claim 6, wherein the active metal includes one or more selected from the group consisting of nickel, vanadium, iron, platinum, palladium, and ruthenium.

8. The method of claim 7, wherein the support includes one or more selected from the group consisting of silica, alumina, silica-alumina, carbon, zirconia, titania, zeolite, SAPO, and ALPO.

9. The method of claim 1, wherein step (S2) is performed at a temperature of 700 to 1,000°C.

10. The method of claim 1, wherein step (S4) is performed at a temperature of 600 to 1,000°C and a pressure of 50 to 300 kPa.

11. A system for producing hydrogen, the system comprising:
a purification unit configured to purify landfill gas to generate a first mixed gas;
a first reactor configured to generate a second mixed gas by subjecting the first mixed gas to a steam reforming reaction in the presence of a catalyst;
a carbon dioxide separation unit configured to separate the second mixed gas into a first stream containing carbon dioxide and a second stream containing hydrogen and carbon monoxide;
a second reactor configured to convert the first stream into carbon monoxide through a reverse Boudouard reaction;
a gas mixing unit configured to produce a third mixed gas by mixing the second stream with the carbon monoxide converted in the second reactor; and
a syngas generation unit configured to convert the third mixed gas into syngas through a water-gas shift reaction,
wherein carbon dioxide is separated from the syngas in the carbon dioxide separation unit to obtain hydrogen.

12. The system of claim 11, wherein the first reactor is a first fluidized bed reactor, and the second reactor is a second fluidized bed reactor.

13. The system of claim 12, further comprising:
a cyclone connected between the first fluidized bed reactor and the carbon dioxide separation unit;
a catalyst supply line connecting the cyclone and the second fluidized bed reactor; and
a catalyst recirculation line connecting the second fluidized bed reactor and the first fluidized bed reactor,
wherein the cyclone is configured to separate the second mixed gas and the catalyst discharged from the first fluidized bed reactor, supply the second mixed gas to the carbon dioxide separation unit, and supply the catalyst to the second fluidized bed reactor.

14. The system of claim 11, wherein the purification unit includes at least one selected from the group consisting of a scrubber, an adsorption column, and pressure swing adsorption (PSA).
